# EUROPEAN PATENT APPLICATION

(11) **EP 4 564 047 A1**
(43) Date of publication of application: **04.06.2025**
(21) Application number: 22953795.6
(22) Date of filing: 26.09.2022
(51) Int. Cl.: G01S 7/40, H01F 17/00

(54) **FILTER ASSEMBLY, INVERTER, MOTOR DRIVING SYSTEM, AND VEHICLE**

(30) Priority: 05.08.2022 WO PCT/CN2022/110584
(71) Applicant: Contemporary Amperex Intelligence Technology (Shanghai) Limited, Shanghai 201306 (CN)
(72) Inventor: WU, Kai, Shanghai 200120 (CN)
(74) Representative: Gong, Jinping
(86) International application number: PCT/CN2022/121456
(87) International publication number: WO 2024/027002

(57) **Abstract**

Embodiments of this application provide a filtering assembly, an inverter, a motor drive system, and a vehicle. The filtering assembly includes N alternating current metal bars, a boost metal bar, and a magnetic ring. At least some of the N alternating current metal bars are stacked, N being an integer greater than 1. The boost metal bar is disposed to a side of the N alternating current metal bars. The magnetic ring surrounds the N alternating current metal bars and the boost metal bar, where in the magnetic ring, the N alternating current metal bars are spaced apart from and opposite to the boost metal bar.

## Description

### CROSS-REFERENCE TO RELATED APPLICATIONS

This application claims the priority of the international patent application PCT/CN2022/110584 entitled "A filtering assembly, inverter, motor drive system, and vehicle" filed on August 5, 2022, the entire content of which is incorporated herein by reference.

### TECHNICAL FIELD

This application relates to the field of filtering technology, particularly to a filtering assembly, an inverter, a motor drive system, and a vehicle.

### BACKGROUND

With the rapid development of motor drive systems, their voltage levels are gradually increasing. To meet the charging needs of high-voltage battery packs, a relay is usually added, and a motor winding as a boost inductor and a switch module of an inverter are used to integrate a DC boost function into a motor drive system, making the motor drive system have two modes: driving and boost charging.

However, for the driving mode and boost charging mode of the motor drive system, it is often difficult for the structure of a filtering assembly in the related art to meet filtering requirements for both of the two modes, so that it is likely to cause the magnetic ring in the filtering assembly to saturate and overheat and lead to a problem of filtering failure. It can be seen that the filtering assembly in the related art has the defect of poor filtering effect.

### SUMMARY

Embodiments of this application provide a filtering assembly, an inverter, a motor drive system, and a vehicle, to solve the technical problem of poor filtering effect in the filtering assembly.

According to a first aspect, an embodiment of this application provides a filtering assembly, including:
N alternating current metal bars, where at least some of the N alternating current metal bars are stacked, N being an integer greater than 1;
a boost metal bar, disposed to a side of the N alternating current metal bars; and
a magnetic ring, surrounding the N alternating current metal bars and the boost metal bar, where in the magnetic ring, the N alternating current metal bars are spaced apart from and opposite to the boost metal bar.

In this embodiment of this application, the N alternating current metal bars are stacked, and the boost metal bar is disposed to a side of the N alternating current metal bars. The N alternating current metal bars and the boost metal bar can all be surrounded by the magnetic ring and are located at opposite and spaced positions in the magnetic ring, resulting in a higher structural integration rate of the entire filtering assembly. In this way, in driving mode, the boost metal bar does not work, and the N alternating current metal bars carry alternating current. Due to the highly integrated structure of the filtering assembly, magnetic fields generated by the N alternating current metal bars carrying the alternating current cancel each other out, thereby mitigating the problem of filtering failure caused by local saturation and overheat of the magnetic ring due to uneven distribution. In boost charging mode, both the boost metal bar and the N alternating current metal bars carry boost current. In this case, magnetic fields generated by the current in the boost metal bar and the N alternating current metal bars cancel each other out in the magnetic ring, so no problem of filtering failure caused by saturation and overheat of the magnetic ring occurs. Therefore, this filtering assembly can meet the filtering requirements for the both modes, providing a better filtering effect.

Optionally, in some embodiments, any two of the N alternating current metal bars overlap in their orthographic projections along a stacking direction.

In this way, the integration degree of the N alternating current metal bars can be further improved, thereby further mitigating the problem of filtering failure in driving mode caused by local saturation and overheat of the magnetic ring due to uneven distribution.

Optionally, in some embodiments, the filtering assembly further includes:
a magnetic core central column, disposed in the magnetic ring and positioned between the N alternating current metal bars and the boost metal bar, where an air gap is provided in the magnetic ring, and the air gap connects the N alternating current metal bars to the boost metal bar.

In the embodiments, the presence of the air gap can provide a differential mode inductance in boost charging mode. The differential mode inductance can suppress differential mode noises generated in boost charging mode, thereby further improving the filtering effect of the filtering assembly.

Optionally, in some embodiments, the magnetic core central column is connected to an inner wall of the magnetic ring.

In this embodiment, the magnetic core central column can be connected to the inner wall of the magnetic ring between the N alternating current metal bars and the boost metal bar and spaced apart from the opposite inner wall at its connection to form an air gap, thereby providing the differential mode inductance.

Optionally, in some embodiments, the magnetic core central column includes:
a first part, connected to the inner wall of the magnetic ring; and
a second part, connected to the inner wall of the magnetic ring, where the first part and the second part are spaced apart and perpendicular to a direction in which the N alternating current metal bars face the boost metal bar.

In this embodiment, the magnetic core central column may include the first part and the second part, both connected to the inner wall of the magnetic ring and spaced apart, so that an air gap between the first part and the second part can be formed for the purpose of providing differential mode inductance.

Optionally, in some embodiments, the first part and the second part are positioned directly opposite to each other. In this way, the size of the air gap can be more accurately adjusted, so that the differential mode inductance can better meet an actual need, further improving the filtering effect of the filtering assembly.

Optionally, in some embodiments, the magnetic core central column is spaced apart from the inner wall of the magnetic ring.

In this embodiment, the magnetic core central column and the magnetic ring are independent of each other. At least two air gaps can be formed between the magnetic core central column and the inner wall of the magnetic ring. When the maximum power in boost charging mode is the same, the number of air gaps increases, and the size of a single air gap decreases. Accordingly, the edge effect of a magnetic field generated by magnetomotive force of the air gap can be weakened with the reduction of the size of the air gap, and the eddy current loss of the N alternating current metal bars and the boost metal bar can be reduced as the edge effect weakens.

Optionally, in some embodiments, the number of magnetic core central columns is M, and the M magnetic core central columns are spaced apart along a direction perpendicular to the direction in which the N alternating current metal bars face the boost metal bar, M being an integer greater than 1.

In this embodiment, the M magnetic core central columns can further increase the number of air gaps, thereby further reducing the size of a single air gap. This weakens the edge effect of the magnetic field, which in turn reduces the eddy current loss of the N alternating current metal bars and the boost metal bar.

Optionally, in some embodiments, the boost metal bar and the N alternating current metal bars are all disposed along a first direction; or
the boost metal bar and the N alternating current metal bars are all disposed along a second direction; or
either the boost metal bar or the N alternating current metal bars are disposed along the first direction, and the other is disposed along the second direction;
where the first direction is perpendicular to the direction in which the N alternating current metal bars face the boost metal bar, and the second direction is parallel to the direction in which the N alternating current metal bars face the boost metal bar.

In this embodiment, the directions and positions of the boost metal bar and the N alternating current metal bars can all be adjusted according to actual arrangement and space for the motor drive system, so that the structure of the filtering assembly is no longer constrained by the position of the metal bars, and the filtering assembly has higher degree of freedom.

Optionally, in some embodiments, a cross-sectional shape of the magnetic ring is rectangular, circular, or oval.

In this embodiment, the shape of the magnetic ring can also be selected according to an actual need, further improving the degree of freedom of the filtering assembly.

According to a second aspect, an embodiment of this application further provides an inverter, including the filtering assembly according to the first aspect.

In this embodiment of this application, due to the foregoing filtering assembly structure, regardless of whether in driving mode or in boost charging mode, the inverter can mitigate the problem of filtering failure caused by saturation and overheat of the magnetic ring. In other words, the inverter can meet the filtering requirements for the both modes, providing a better filtering effect.

According to a third aspect, an embodiment of this application further provides a motor drive system, including the inverter according to the second aspect.

In this embodiment of this application, when the motor drive system is in either driving mode or boost charging mode, the magnetic ring does not cause filtering failure due to saturation and overheat, making the filtering effect of the motor drive system better and its reliability higher.

According to a third aspect, an embodiment of this application further provides a vehicle, including the motor drive system according to the third aspect.

In this embodiment of the application, due to the better filtering effect and higher reliability, the motor drive system can improve the comfort of the vehicle during driving and enhance the safety of vehicle charging.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.
FIG. 1 is a schematic structural diagram of a filtering assembly according to an embodiment of this application;
FIG. 2 is a schematic structural diagram of N alternating current metal bars in a filtering assembly according to an embodiment of this application;
FIG. 3 is another schematic structural diagram of N alternating current metal bars in a filtering assembly according to an embodiment of this application;
FIG. 4 is another schematic structural diagram of a filtering assembly according to an embodiment of this application;
FIG. 5 is another schematic structural diagram of a magnetic core central column in FIG. 4;
FIG. 6 is a further schematic structural diagram of a filtering assembly according to an embodiment of this application;
FIG. 7a is a first schematic diagram of an arrangement of N alternating current metal bars and a boost metal bar in a filtering assembly according to an embodiment of this application;
FIG. 7b is a second schematic diagram of an arrangement of N alternating current metal bars and a boost metal bar in a filtering assembly according to an embodiment of this application;
FIG. 7c is a third schematic diagram of an arrangement of N alternating current metal bars and a boost metal bar in a filtering assembly according to an embodiment of this application;
FIG. 7d is a fourth schematic diagram of an arrangement of N alternating current metal bars and a boost metal bar in a filtering assembly according to an embodiment of this application; and
FIG. 8 is a schematic structural diagram of a magnetic ring in a filtering assembly according to an embodiment of this application.

Reference signs:
10. alternating current metal bar;
20. boost metal bar;
30. magnetic ring; 31. air gap;
40. magnetic core central column; 41. first part; and 42. second part;

In the accompanying drawings, the figures are not necessarily drawn to scale.

### DESCRIPTION OF EMBODIMENTS

The following further describes implementations of this application in detail with reference to the accompanying drawings and embodiments. The following detailed description of embodiments and the accompanying drawings are intended to illustrate the principle of this application rather than to limit the scope of this application, meaning this application is not limited to the embodiments as described.

In the description of this application, it should be noted that, unless otherwise stated, "multiple" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not strictly perpendicular, but within an allowable range of error. "Parallel" is not strictly parallel, but within the allowable range of error.

The orientation terms appearing in the following description all are directions shown in the figures, and do not limit the specific structure of the application. In the description of this application, it should also be noted that unless otherwise specified and defined explicitly, the terms "mounting", "connection", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

In the related art, a filtering assembly usually uses a magnetic ring to surround multiple alternating current metal bars (for example, three-phase metal bars) arranged side by side in a certain direction, that is, multiple alternating current metal bars are located in the magnetic ring, while a boost metal bar is located outside the magnetic ring. In this way, in driving mode, the alternating current metal bars carry alternating current. Due to even distribution of the multiple alternating current metal bars in the magnetic ring, their generated magnetic fields can cancel each other out, thereby avoiding saturation of the magnetic ring in driving mode and maintaining the filtering suppression effect of the magnetic ring. However, in boost charging mode, the multiple alternating current metal bars carry in-phase boost current, causing saturation and overheat of the magnetic ring and leading to filtering failure.

The applicant has found that it is possible for the magnetic ring to surround both the alternating current metal bars and the boost metal bar, which means that both the alternating current metal bars and the boost metal bar are located in the magnetic ring. In this way, the magnetic fields generated by the current flowing through the boost metal bar and the alternating current metal bars in boost charging mode of the magnetic ring are canceled out in the magnetic ring, and thus the magnetic ring does not cause filtering failure due to saturation and overheat. However, in driving mode, because multiple alternating current metal bars are arranged side by side along a direction, when the boost metal bar does not work and only the multiple alternating current metal bars carry alternating current, the magnetic ring is locally saturated and overheated due to uneven distribution of magnetic fields, and the filtering suppression effect also fails after operation for a long time. It can be seen that the existing filtering assemblies often struggle to meet the filtering requirements for the both modes.

Based on the foregoing problems discovered by the applicant, the applicant has improved the structure of the filtering assembly. The technical solution described in the embodiments of this application is applicable to a filtering assembly, an inverter including the filtering assembly, a motor drive system including the inverter, and a vehicle using the motor drive system.

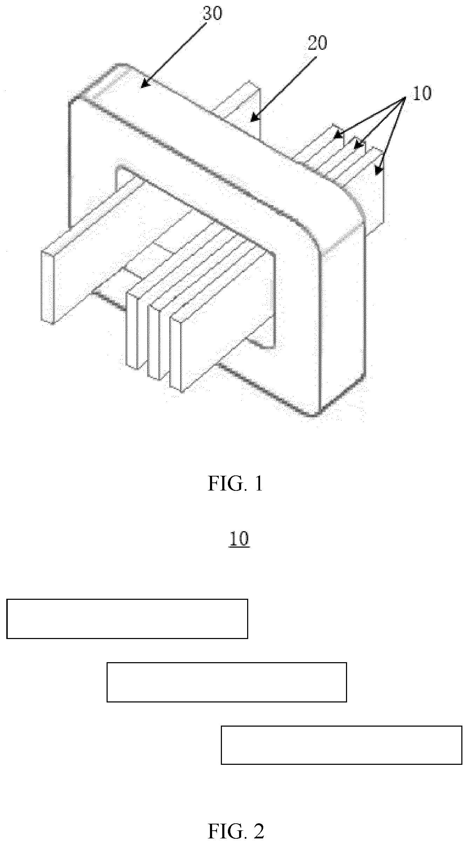

Referring to FIG. 1, FIG. 1 is a filtering assembly according to some embodiments of this application, including:
N alternating current metal bars 10, where at least some of the N alternating current metal bars 10 are stacked, N being an integer greater than 1;
a boost metal bar 20, disposed to a side of the N alternating current metal bars 10; and
a magnetic ring 30, surrounding the N alternating current metal bars 10 and the boost metal bar 20, where in the magnetic ring 30, the N alternating current metal bars 10 are spaced apart from and opposite to the boost metal bar 20.

In the embodiments of this application, the N alternating current metal bars 10 may refer to the metal bars used by the motor drive system to carry alternating current of different phases in driving mode, and their number can be set according to an actual situation and is not specifically limited herein. For example, taking N alternating current metal bars 10 that can output three-phase alternating current as an example, the N alternating current metal bars 10 can include a first metal bar, a second metal bar, and a third metal bar, where the first metal bar can carry U-phase alternating current, the second metal bar can carry V-phase alternating current, and the third metal bar can carry W-phase alternating current, where the U-phase alternating current, V-phase alternating current, and W-phase alternating current have the same frequency, equal potential amplitudes, and a phase difference of 120° angle. It can be understood that the alternating current metal bars and the boost metal bar may be made of metals such as copper, alloys, aluminum, and iron.

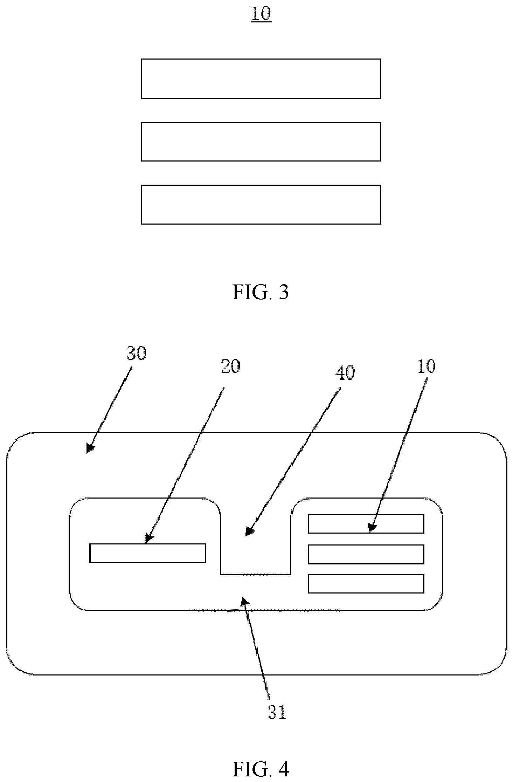

At least some of the N alternating current metal bars 10 may be stacked. It can be understood that for the N alternating current metal bars 10 being stacked, as shown in FIG. 2, they can be partially stacked together for two adjacent alternating current metal bars 10, or as shown in FIG. 3, they can be fully aligned and stacked together for two adjacent alternating current metal bars 10. In this way, the integration degree of the N alternating current metal bars 10 is higher.

The boost metal bar 20 may be located on a side to the stacked N alternating current metal bars 10. The magnetic ring 30 surrounds both the N alternating current metal bars 10 and the boost metal bar 20, so that the N alternating current metal bars 10 and the boost metal bar 20 can all be located in the magnetic ring 30, and in the magnetic ring 30, the N alternating current metal bars 10 are spaced apart from and opposite to the boost metal bar 20.

When the motor drive system is in driving mode, the boost metal bar 20 does not work (that is, carrying no current), and the N alternating current metal bars 10 carry alternating current. In this case, due to a stacked structure adopted by the N alternating current metal bars 10, the N alternating current metal bars 10 are highly integrated in the magnetic ring 30, and magnetic fields generated by the N alternating current metal bars 10 carrying the alternating current can cancel each other out, thereby mitigating the problem of filtering failure caused by local saturation and overheat of the magnetic ring 30 due to uneven distribution. When the motor drive system is in boost charging mode, both the boost metal bar 20 and the N alternating current metal bars 10 carry boost current. In this case, magnetic fields generated by the current in the boost metal bar 20 and the N alternating current metal bars 10 cancel each other out in the magnetic ring 30, so no problem of filtering failure caused by saturation and overheat of the magnetic ring 30 occurs. Therefore, with the filtering assembly structure in the embodiments of this application, regardless whether in driving mode or boost charging mode, the problem of filtering failure caused by saturation and overheat of the magnetic ring 30 can be mitigated. In other words, the filtering assembly can meet the filtering requirements for the both modes, providing a better filtering effect.

Optionally, in some embodiments, any two of the N alternating current metal bars 10 overlap in their orthographic projections along a stacking direction.

As shown in FIG. 3, in the embodiments, any two alternating current metal bars 10 may overlap in their orthographic projections along the stacking direction. In other words, the N alternating current metal bars 10 may be fully aligned and stacked together. In this way, the integration degree of the N alternating current metal bars 10 can be further improved, thereby further mitigating the problem of filtering failure in driving mode caused by local saturation and overheat of the magnetic ring 30 due to uneven distribution.

Optionally, in some embodiments, the filtering assembly further includes:
a magnetic core central column 40, disposed in the magnetic ring 30 and positioned between the N alternating current metal bars 10 and the boost metal bar 20, where an air gap 31 is provided in the magnetic ring 30, and the air gap 31 connects the N alternating current metal bars 10 to the boost metal bar 20.

As shown in FIG. 4, in the embodiments, the magnetic ring 30 may alternatively be provided with a magnetic core central column 40. The magnetic core central column 40 may be positioned between the N alternating current metal bars 10 and the boost metal bar 20 to separate the N alternating current metal bars 10 from the boost metal bar 20. In other words, the magnetic core central column 40 can divide the space in the magnetic ring 30 into two regions, so that the N alternating current metal bars 10 and the boost metal bar 20 each can be in a different region.

The magnetic ring 30 may also be provided with an air gap 31 that connects the N alternating current metal bars 10 and the boost metal bar 20. That is, the magnetic core central column 40 does not completely separate the N alternating current metal bars 10 from the boost metal bar 20 in the magnetic ring 30, but leaves the air gap 31, where the size of the air gap 31 can be adjusted according to the maximum power in boost charging mode. Generally speaking, a greater maximum power indicates a larger size of the air gap 31.

In the embodiments, the presence of the air gap 31 can provide a differential mode inductance in boost charging mode. The differential mode inductance can suppress differential mode noises generated in boost charging mode, thereby further improving the filtering effect of the filtering assembly.

Optionally, in some embodiments, the magnetic core central column 40 is connected to an inner wall of the magnetic ring 30.

As shown in FIG. 4, the magnetic core central column 40 can be connected to the inner wall of the magnetic ring 30 between the N alternating current metal bars 10 and the boost metal bar 20. For example, taking the magnetic ring 30 being a rectangular magnetic ring 30 as an example, the N alternating current metal bars 10 and the boost metal bar 20 may be located on the left and right sides of the rectangular magnetic ring 30, respectively, and the magnetic core central column 40 may be connected to the inner wall of the upper or lower side of the rectangular magnetic ring 30 and be spaced apart from the inner wall on the opposite side. In this way, the magnetic core central column 40 and the inner wall of the magnetic ring 30 spaced apart therefrom can form the air gap 31 therebetween.

It can be understood that the magnetic core central column 40 may be bonded, welded, or otherwise fixedly connected to the inner wall of the magnetic ring 30, or the magnetic core central column 40 may alternatively be integrally formed with the magnetic ring 30.

Optionally, in some embodiments, the magnetic core central column 40 includes:
a first part 41, connected to the inner wall of the magnetic ring 30; and
a second part 42, connected to the inner wall of the magnetic ring 30, where the first part 41 and the second part 42 are spaced apart and perpendicular to a direction in which the N alternating current metal bars 10 face the boost metal bar 20.

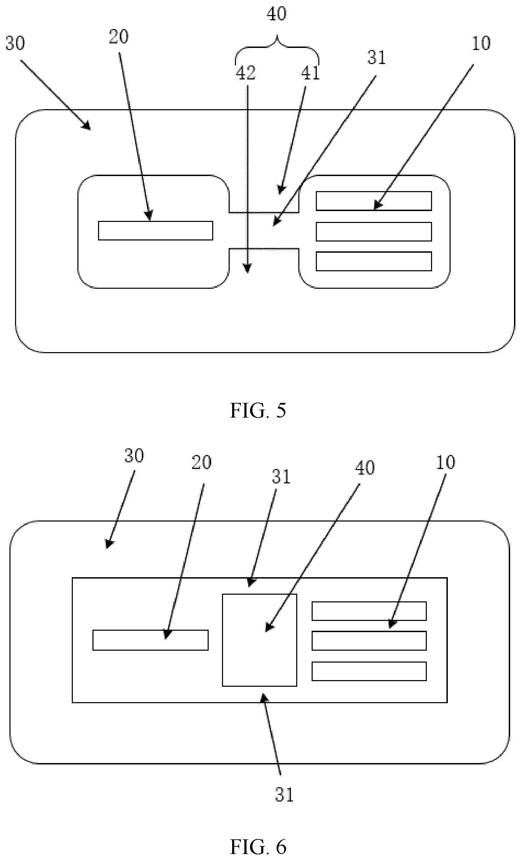

As shown in FIG. 5, the magnetic core central column 40 may include a first part 41 and a second part 42, where the first part 41 and the second part 42 are spaced apart and perpendicular to a direction in which the N alternating current metal bars 10 face the boost metal bar 20, and are both connected to the inner wall of the magnetic ring 30. For example, taking the magnetic ring 30 being a rectangular magnetic ring 30 as an example, the N alternating current metal bars 10 and the boost metal bar 20 may be located on the left and right sides of the rectangular magnetic ring 30, respectively. In this case, the first part 41 may be connected to the inner wall of the upper side of the rectangular magnetic ring 30, and the second part 42 may be connected to the inner wall of the lower side of the rectangular magnetic ring 30. Moreover, the first part 41 and the second part 42 may be spaced apart to form an air gap 31.

Optionally, in some embodiments, the first part 41 and the second part 42 are positioned directly opposite to each other.

It can be understood that to more accurately adjust the size of the air gap 31 according to the maximum power in boost charging mode, the first part 41 and the second part 42 may be positioned directly opposite to each other. In this way, the size of the air gap 31 can be calculated based on a spacing distance between the first part 41 and the second part 42 and an area of opposing surfaces of the first part 41 and the second part 42. In other words, once the area of the opposing surfaces of the first part 41 and the second part 42 is determined, the size of the air gap 31 can be adjusted by adjusting the spacing distance between the first part 41 and the second part 42, that is, optimized according to need, so that differential mode inductance provided by the air gap 31 can better meet an actual need, thereby further improving the filtering effect of the filtering assembly.

Optionally, in some embodiments, the magnetic core central column 40 is spaced apart from the inner wall of the magnetic ring 30.

It can be understood that a magnetic conductor in an alternating magnetic field generates eddy currents due to electromagnetic induction, which causes uneven distribution of amplitude and phase of magnetic field intensity and magnetic induction intensity within the material and causes the phase of the magnetic induction intensity to lag behind the phase of the magnetic field intensity, adding a portion of energy loss, known as eddy current loss. A magnetic field generated by the magnetomotive force of the air gap 31 cuts across the N alternating current metal bars 10 and the boost metal bar 20, causing eddy current loss.

As shown in FIG. 6, in this embodiment, the magnetic core central column 40 can be spaced apart from the inner wall of the magnetic ring 30. In other words, the magnetic core central column 40 and the magnetic ring 30 are independent of each other. At least two air gaps 31 can be formed between the magnetic core central column 40 and the inner wall of the magnetic ring 30. Due to the fact that the size of the air gap 31 can be determined based on the maximum power in boost charging mode, when the maximum power in boost charging mode is the same, the number of air gaps 31 increases, that is, the size of a single air gap 31 decreases. Accordingly, the edge effect of a magnetic field generated by the magnetomotive force of the air gap 31 can be weakened with the reduction of the size of the air gap 31, and the eddy current loss of the N alternating current metal bars 10 and the boost metal bar 20 can be reduced as the edge effect weakens.

Optionally, in some embodiments, the number of magnetic core central columns 40 is M, and the M magnetic core central columns 40 are spaced apart along a direction perpendicular to the direction in which the N alternating current metal bars 10 face the boost metal bar 20, M being an integer greater than 1.

In this embodiment, the number of magnetic core central columns 40 may alternatively be two or more, and may be spaced apart along a direction perpendicular to the direction in which the N alternating current metal bars 10 face the boost metal bar 20. In this way, an air gap 31 can be formed between the magnetic core central column 40 close to the magnetic ring 30 and the inner wall of the magnetic ring 30, and an air gap 31 may also be formed between two adjacent magnetic core central columns 40.

In this embodiment, the M magnetic core central columns 40 can further increase the number of air gaps 31, thereby further reducing the size of a single air gap 31. This weakens the edge effect of the magnetic field, which in turn reduces the eddy current loss of the N alternating current metal bars 10 and the boost metal bar 20.

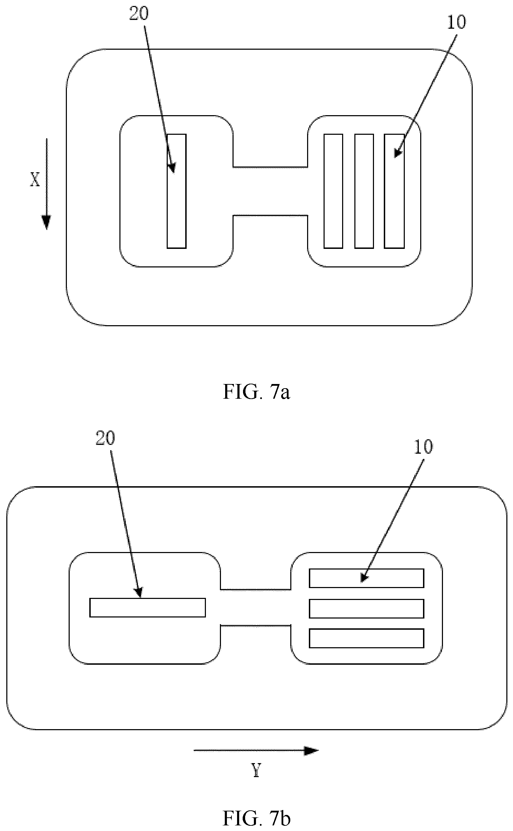

Referring to FIG. 7a to FIG. 7d, optionally, in some embodiments, the boost metal bar 20 and the N alternating current metal bars 10 are all disposed along a first direction (X);
the boost metal bar 20 and the N alternating current metal bars 10 are all disposed along a second direction (Y); or
either the boost metal bar 20 or the N alternating current metal bars 10 are disposed along the first direction (X), and the other is disposed along the second direction (Y);
where the first direction (X) is perpendicular to the direction in which the N alternating current metal bars 10 face the boost metal bar 20, and the second direction (Y) is parallel to the direction in which the N alternating current metal bars 10 face the boost metal bar 20.

For ease of describing the solution of the embodiments of this application, the following will take the direction in which the N alternating current metal bars 10 face the boost metal bar 20 as the horizontal direction for illustration.

As shown in FIG. 7a, the boost metal bar 20 and the N alternating current metal bars 10 can all be disposed along a direction perpendicular to the direction in which the N alternating current metal bars 10 face the boost metal bar 20. In other words, the boost metal bar 20 and the N alternating current metal bars 10 can all be disposed along vertical direction.

As shown in FIG. 7b, the boost metal bar 20 and the N alternating current metal bars 10 can all be disposed along a direction parallel to the direction in which the N alternating current metal bars 10 face the boost metal bar 20. In other words, the boost metal bar 20 and the N alternating current metal bars 10 can all be disposed along horizontal direction.

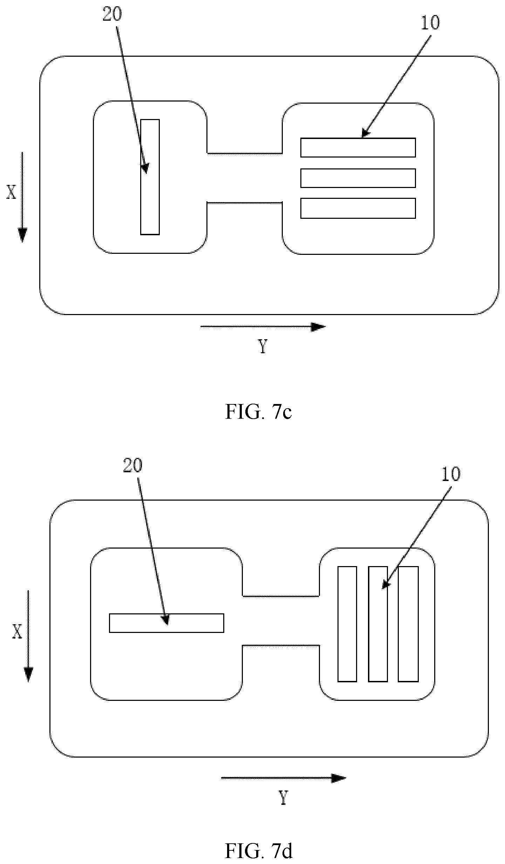

As shown in FIG. 7c, the boost metal bar 20 may be disposed along a direction perpendicular to the direction in which the N alternating current metal bars 10 face the boost metal bar 20, while the N alternating current metal bars 10 may be disposed along a direction parallel to the direction in which the N alternating current metal bars 10 face the boost metal bar 20. In other words, the boost metal bar 20 may be disposed along vertical direction, while the N alternating current metal bars 10 may be disposed along horizontal direction.

As shown in FIG. 7d, the boost metal bar 20 may be disposed along a direction parallel to the direction in which the N alternating current metal bars 10 face the boost metal bar 20, while the N alternating current metal bars 10 may be disposed along a direction perpendicular to the direction in which the N alternating current metal bars 10 face the boost metal bar 20. In other words, the boost metal bar 20 may be disposed along horizontal direction, while the N alternating current metal bars 10 may be disposed along vertical direction.

It can be understood that the foregoing arrangement directions of the boost metal bar 20 and the N alternating current metal bars 10 are only listed as part of arrangement for description of the solution and merely intended to help understand the technical content of this application, and do not constitute a limitation on the technical solution of this application itself. For example, in some application scenarios, according to actual needs, the boost metal bar 20 and the N alternating current metal bars 10 may alternatively be arranged relatively inclined in the magnetic ring 30, and this is not specifically limited herein.

In this embodiment, the directions and positions of the boost metal bar 20 and the N alternating current metal bars 10 can all be adjusted according to actual arrangement and space for the motor drive system, so that the structure of the filtering assembly is no longer constrained by the position of the metal bars, and the filtering assembly has higher degree of freedom.

Optionally, in some embodiments, a cross-sectional shape of the magnetic ring 30 is rectangular, circular, or oval.

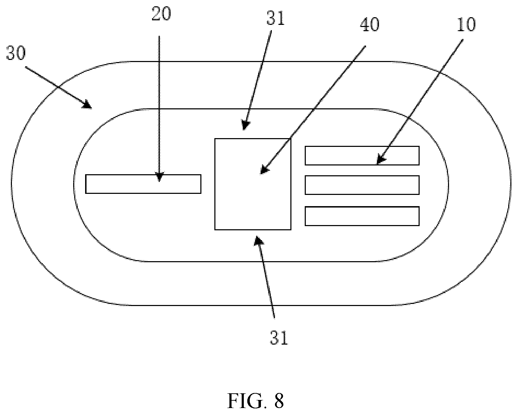

In the embodiments, the shape of the magnetic ring 30 can also be selected according to actual needs. For example, as shown in FIG. 6, the cross-sectional shape of the magnetic ring 30 may be rectangular, that is, the magnetic ring 30 may be a rectangular magnetic ring 30. As shown in FIG. 8, the cross-sectional shape of the magnetic ring 30 may alternatively be oval, that is, the magnetic ring 30 may be an oval magnetic ring 30. It can be understood that the cross-sectional shape of the magnetic ring 30 may alternatively be circular, or the like. In this way, the degree of freedom of the filtering assembly is further improved.

An embodiment of this application further provides an inverter, including the foregoing filtering assembly. Due to the foregoing filtering assembly structure, regardless of whether in driving mode or in boost charging mode, the inverter can mitigate the problem of filtering failure caused by saturation and overheat of the magnetic ring. In other words, the inverter can meet the filtering requirements for the both modes, providing a better filtering effect.

An embodiment of this application further provides a motor drive system. The motor drive system may include the foregoing inverter. In this way, when the motor drive system is in either driving mode or boost charging mode, the magnetic ring does not cause filtering failure due to saturation and overheat, making the filtering effect of the motor drive system better and its reliability higher.

An embodiment of this application further provides a vehicle. The vehicle may include the foregoing motor drive system. In this way, due to the better filtering effect and higher reliability, the motor drive system can improve the comfort of the vehicle during driving and enhance the safety of vehicle charging.

Although this application has been described with reference to the preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A filtering assembly, comprising:
N alternating current metal bars, wherein at least some of the N alternating current metal bars are stacked, N being an integer greater than 1;
a boost metal bar, disposed to a side of the N alternating current metal bars; and
a magnetic ring, surrounding the N alternating current metal bars and the boost metal bar, wherein in the magnetic ring, the N alternating current metal bars are spaced apart from and opposite to the boost metal bar.

2. The filtering assembly according to claim 1, wherein any two of the N alternating current metal bars overlap in their orthographic projections along a stacking direction.

3. The filtering assembly according to claim 1, further comprising:
a magnetic core central column, disposed in the magnetic ring and positioned between the N alternating current metal bars and the boost metal bar, wherein an air gap is provided in the magnetic ring, and the air gap connects the N alternating current metal bars to the boost metal bar.

4. The filtering assembly according to claim 3, wherein the magnetic core central column is connected to an inner wall of the magnetic ring.

5. The filtering assembly according to claim 3, wherein the magnetic core central column comprises:
a first part, connected to the inner wall of the magnetic ring; and
a second part, connected to the inner wall of the magnetic ring, wherein the first part is spaced apart from the second part and perpendicular to a direction in which the N alternating current metal bars face the boost metal bar.

6. The filtering assembly according to claim 5, wherein the first part and the second part are positioned directly opposite to each other.

7. The filtering assembly according to claim 3, wherein the magnetic core central column is spaced apart from the inner wall of the magnetic ring.

8. The filtering assembly according to claim 7, wherein the number of the magnetic core central columns is M, and the M magnetic core central columns are spaced apart along a direction perpendicular to the direction in which the N alternating current metal bars face the boost metal bar, M being an integer greater than 1.

9. The filtering assembly according to claim 1, wherein the boost metal bar and the N alternating current metal bars are all disposed along a first direction; or
the boost metal bar and the N alternating current metal bars are all disposed along a second direction; or
either the boost metal bar or the N alternating current metal bars are disposed along the first direction, and the other is disposed along the second direction;
wherein the first direction is perpendicular to the direction in which the N alternating current metal bars face the boost metal bar, and the second direction is parallel to the direction in which the N alternating current metal bars face the boost metal bar.

10. The filtering assembly according to claim 1, wherein a cross-sectional shape of the magnetic ring is rectangular, circular, or oval.

11. An inverter, comprising the filtering assembly according to any one of claims 1 to 10.

12. A motor drive system, comprising the inverter according to claim 11.

13. A vehicle, comprising the motor drive system according to claim 12.
